# EUROPÄISCHE PATENTSCHRIFT

(11) **EP 3 467 455 B1**
(45) Veröffentlichungstag und Bekanntmachung des Hinweises auf die Patenterteilung: **16.06.2021**
(21) Anmeldenummer: 18199043.3
(22) Anmeldetag: 08.10.2018
(51) Int. Cl.: G01G 3/14, G01G 19/02, G01L 1/22

(54) **WÄGESYSTEM, ACHSE FÜR EIN KRAFTFAHRZEUG, KRAFTFAHRZEUG UND TACHOGRAPHSYSTEM**
WEIGHING SYSTEM, AXLE FOR A MOTOR VEHICLE, MOTOR VEHICLE AND SPEEDO SYSTEM
SYSTÈME DE PESÉE, ESSIEU POUR UN VÉHICULE AUTOMOBILE, VÉHICULE AUTOMOBILE ET SYSTÈME DE TACHYGRAPHE

(30) Priorität: 09.10.2017 DE 102017217947
(43) Veröffentlichungstag der Anmeldung: 10.04.2019
(73) Patentinhaber: Continental Automotive GmbH, 30165 Hannover (DE)
(72) Erfinder: Dohmen, Ralf, 78050 Villingen-Schwenningen (DE); Gut, Michael, 78199 Bräunlingen (DE); Bertl, Svenja, 78147 Vöhrenbach (DE)
(74) Vertreter: Continental Corporation

(56) Entgegenhaltungen:
- WO-A1-2014/000932
- US-A1- 2014 238 146

## Beschreibung

Die Erfindung nach Anspruch 1 betrifft eine Achse für ein Kraftfahrzeug, die ein Wägesystem aufweist. Die Erfindung betrifft weiterhin ein Kraftfahrzeug mit einem fahrzeugeigenen Wägesystem sowie ein Tachographsystem für ein Kraftfahrzeug.

Achslasten von Kraftfahrzeugen, insbesondere von Nutzfahrzeugen, können mittels einem fahrzeugeigenen Wägesystem gemessen werden. Das Wägesystem kann dazu verschiedenartige Sensoren aufweisen, die direkt im Kraftfahrzeug verbaut sind.

Die US 2014/ 0 238 146 A1 und die WO 2014/ 000 932 A1 beschreiben jeweils ein Wägesystem für ein Kraftfahrzeug, das einen Sensor aufweist, der auf einer Außenseite einer Achse angeordnet ist.

Es ist wünschenswert, eine Achse mit einem Wägesystem, das insbesondere einfach in bestehende Kraftfahrzeuge integrierbar ist und beispielsweise einfach nachrüstbar ist, ein Kraftfahrzeug mit einem fahrzeugeigenen Wägesystem sowie ein Tachographsystem anzugeben.

Gemäß einer Ausführungsform wird eine Achse für ein Kraftfahrzeug mit einem Wägesystem angegeben. Das Wägesystem ist ausgebildet zur Anwendung als fahrzeugeigenes Wägesystem für ein Kraftfahrzeug. Das Wägesystem ist mit einem Kraftfahrzeug koppelbar, um die Achslast der Achse des Kraftfahrzeugs zu ermitteln. Insbesondere ist das Wägesystem eingerichtet, als fahrzeugeigenes Wägesystem an einem Kraftfahrzeug verwendet zu werden, beispielsweise an einem Nutzfahrzeug.

Das Wägesystem weist gemäß Ausführungsformen einen Sensor zum Messen einer Achslast einer Achse des Kraftfahrzeugs auf. Der Sensor ist dazu ausgebildet, an einer Abdeckung der Achse angeordnet zu werden. Die Abdeckung der Achse verformt sich im bestimmungsgemäßen Betrieb des Fahrzeugs korrespondierend mit der Achse in Abhängigkeit von der Achslast.

Fahrzeuge, insbesondere Nutzfahrzeuge oder Lastkraftwagen, können mit einem fahrzeugeigenen Wägesystem (englisch: on-board weighing System) ausgestattet sein. Das Wägesystem ermöglicht eine Bestimmung einer Achslast und damit beispielsweise einer Beladung des Kraftfahrzeugs.

Ein Wägesystem wird beispielsweise während der Herstellung des Kraftfahrzeugs verbaut oder in ein bestehendes Kraftfahrzeug nachgerüstet. Der Sensor ist an einer Innenseite einer Abdeckung der Achse angeordnet. Daher ist der Sensor insbesondere einfach nachrüstbar. Die Geometrie des Kraftfahrzeugs, insbesondere des Kraftfahrzeugrahmens oder der Achse, muss nicht geändert werden, um den notwendigen Platz für die Montage und/oder Aufnahme des Wägesystems und Sensors zu ermöglichen. Der Sensor des Wägesystems kann einfach nachgerüstet werden, indem beispielsweise eine entsprechend angepasste Abdeckung im Vergleich zu herkömmlichen Abdeckungen verwendet wird, an die der Sensor angeordnet werden kann. Somit ist es möglich, eine herkömmliche Achsengeometrie beizubehalten und daher sind in Serie keine weiteren Anpassungen der Achse nötig, um ein Wägesystem an dem Kraftfahrzeug vorzusehen. Es ist möglich, die Achsengeometrie unabhängig von dem Wägesystem zu gestalten. Lediglich der Sensor muss dazu ausgebildet sein, an eine Abdeckung der Achse angeordnet zu werden. Somit werden eine einfache Nachrüstung und ein einfaches Reparieren im Schadensfall ermöglicht. Das Wägesystem ist daher kostengünstig realisierbar.

Gemäß Ausführungsformen weist der Sensor einen Dehnmessstreifen auf. Die Biegung der Achse bei Belastung wird durch den Sensor aufgenommen und in ein elektrisches Signal umgewandelt. Daraus kann das Gewicht ermittelt werden. Der Dehnmessstreifen wandelt mechanische Deformationen wie beispielsweise Dehnungen in elektrisch messbare Größen um, beispielsweise in elektrische Spannungen. Bei mechanischer Belastung biegen sich die Achsen des Kraftfahrzeugs. Die mechanische Dehnung bei Belastung findet auch an der Abdeckung statt. Daher ist die Achslast auch mittels des Dehnmessstreifens ermittelbar, der ausgebildet ist, an der Abdeckung angeordnet zu werden.

Gemäß zumindest einer weiteren Ausführungsform ist die Abdeckung eine Differenzialabdeckung für ein Differenzialgetriebe der Achse. Das Differenzialgetriebe ist insbesondere in der Achse verbaut. Ein Gehäuse des Differenzialgetriebes besitzt in der Regel eine Öffnung, die mit der Differenzialabdeckung verschließbar ist. Die Öffnung dient beispielsweise zur Montage und/oder Wartung des Differenzialgetriebes. Der Sensor, der an der Differenzialabdeckung angeordnet werden kann, ist, ermöglicht den Einsatz des Wägesystems ohne, dass die Achse beziehungsweise das Gehäuse des Differenzialgetriebes modifiziert werden müssen. Beispielsweise wird eine herkömmliche Abdeckkappe durch die Differenzialabdeckung ausgetauscht, an der der Sensor befestigbar ist. Somit kann die herkömmliche Achsengeometrie beibehalten werden und es sind insbesondere keine Anpassungen der Achse nötig.

Das Wägesystem ermöglicht einen einfachen Einsatz eines fahrzeugeigenen Wägesystems an einem Kraftfahrzeug. Dabei kann auf eine Modifikation der Achse verzichtet werden, um die Integration des Sensors zu ermöglichen. Somit wird Entwicklungsaufwand eingespart und das Wägesystem und das Kraftfahrzeug mit dem Wägesystem sind kostengünstiger. Auch auf eine Veränderung der Geometrie des gesamten Kraftfahrzeugrahmens kann verzichtet werden, da kein zusätzlicher Platz für die Montage und Aufnahme des Sensors geschaffen werden muss. Der Sensor lässt sich einfach in den bereits bestehenden Bauraum, insbesondere in der Differenzialabdeckung des Differenzialgetriebes, als Dehnmessstreifen integrieren.

Es wird eine Achse für ein Kraftfahrzeug angegeben, die ein Wägesystem aufweist. Der Sensor ist an der Innenseite der Abdeckung der Achse angeordnet. Beispielsweise ist der Sensor an der Abdeckkappe verklebt oder mittels einer anderen Verbindungsmethode fest mit der Abdeckung verbunden. Somit ist es möglich, mittels des Sensors eine Deformierung der Abdeckung zu messen, beispielsweise eine Dehnung und/oder eine Stauchung.

Gemäß zumindest einer weiteren Ausführungsform weist die Achse ein Differenzialgetriebe mit einer Differenzialabdeckung auf. Der Sensor ist an der Differenzialabdeckung befestigbar. Somit ist der Sensor einfach in herkömmliche Achsen integrierbar beziehungsweise nachrüstbar.

Gemäß einer weiteren Ausführungsform wird ein Kraftfahrzeug mit einem fahrzeugeigenen Wägesystem angegeben. Das Kraftfahrzeug weist die Achse auf. Der Sensor ist an der Innenseite der Abdeckung der Achse angeordnet. Das Kraftfahrzeug ist insbesondere ein herkömmliches Kraftfahrzeug, beispielsweise ein herkömmlicher Lastkraftwagen. Beispielsweise an der Hinterachse des Kraftfahrzeugs ist unmittelbar an der Abdeckung der Achse der Sensor angeordnet. Somit lässt sich eine Beladung des Kraftfahrzeugs einfach und zuverlässig sowie kostengünstig ermitteln.

Gemäß zumindest einer Ausführungsform wird ein Tachographsystem für ein Kraftfahrzeug angegeben. Das Tachographsystem ist dazu ausgebildet, mit einem Wägesystem signaltechnisch gekoppelt zu sein, um Messsignale des Sensors auszuwerten und in Abhängigkeit von den Messsignalen die Achslast des Kraftfahrzeugs zu ermitteln. Insbesondere ist das Tachographsystem mit dem Sensor des fahrzeugeigenen Wägesystems gekoppelt, um die Achslast ermitteln zu können.

Gemäß zumindest einer Ausführungsform weist das Tachographsystem ein Wägesystem mit dem Sensor zum Messen der Achslast des Kraftfahrzeugs auf. Das Tachographsystem weist eine Steuervorrichtung auf, die signaltechnisch mit dem Sensor gekoppelt ist, um Messsignale des Sensors auszuwerten. Insbesondere weist das Tachographsystem einen digitalen Tachographen auf. Die Steuervorrichtung ist beispielsweise Teil des digitalen Tachographen.

Ein digitaler Tachograph wird in Kraftfahrzeugen beispielsweise verwendet, um Lenk- und Ruhezeigen, Lenkzeitunterbrechungen, zusätzlich gefahrene Kilometer und/oder eine gefahrene Geschwindigkeit aufzuzeichnen. Der digitale Tachograph weist beispielsweise eine Speichervorrichtung auf. Zudem verfügt der Tachograph beispielsweise über eine oder mehrere Kommunikationsschnittstellen zum Anzeigen der Messdaten des Wägesystems, insbesondere der gemessenen Achslast. Beispielsweise ist der Tachograph dazu ausgebildet, die gemessene Achslast mit vorgegebenen Schwellwerten für die Achslast zu vergleichen und beim Überschreiten eines oder mehrerer Schwellwerte ein entsprechendes Signal auszugeben, beispielsweise einen Alarm auszulösen. Zudem ist es möglich, die gemessenen Achslasten über eine gewisse Zeitdauer zu speichern und/oder anderen Geräten zur Verfügung zu stellen, die weitere Aktionen auslösen.

Weitere Vorteile, Merkmale und Weiterbildungen ergeben sich aus den nachfolgenden, in Verbindung mit den Figuren erläuterten Beispielen. Gleiche, gleichartige und gleichwirkende Elemente können dabei mit den gleichen Bezugszeichen versehen sein.

Es zeigen:
Figur 1 eine schematische Darstellung eines Kraftfahrzeugs gemäß einem Ausführungsbeispiel,
Figur 2 eine schematische Darstellung einer Achse gemäß einem Ausführungsbeispiel.

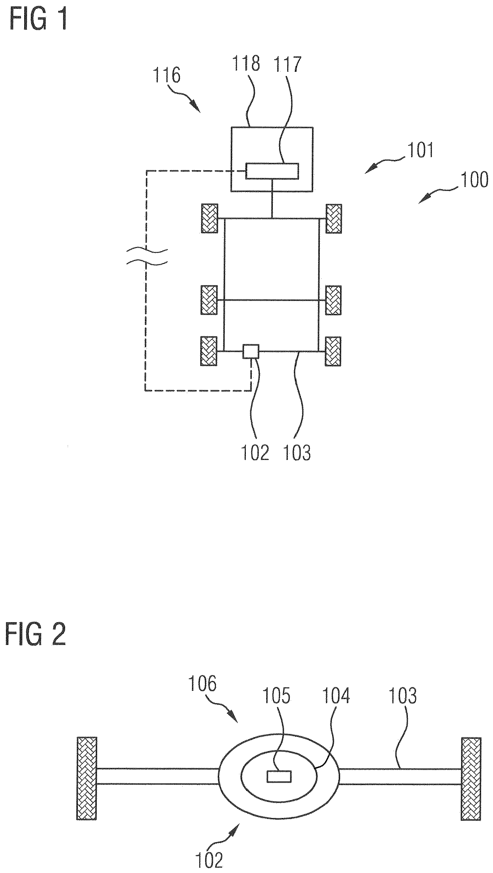

Figur 1 zeigt ein schematisch dargestelltes Kraftfahrzeug 100. Das Kraftfahrzeug 100 ist mit einem fahrzeugeigenen Wägesystem 101 ausgestattet. Das Wägesystem 101 weist einen Sensor 102 auf. Der Sensor 102 dient zum Ermitteln einer Achslast einer Achse 103.

Die Achse 103 ist insbesondere eine Hinterachse des Kraftfahrzeugs 100.

Am Kraftfahrzeug 100 ist eine Steuervorrichtung 117 signaltechnisch mit dem Sensor 102 verbunden. Die Steuervorrichtung 117 ist beispielsweise dazu ausgebildet, die Signale des Sensors 102 auszuwerten. Die Steuervorrichtung 117 ist beispielsweise dazu ausgebildet, die gemessene Achslast anzuzeigen, zu speichern und/oder an externe Geräte zu übermitteln. Insbesondere ist die Steuervorrichtung 117 dazu eingerichtet, die gemessene Achslast mit einem vorgegebenen, beispielsweise gespeicherten Schwellenwert zu vergleichen. Beim Überschreiten des Schwellenwerts, also wenn beispielsweise die Beladung des Kraftfahrzeugs höher ist als zugelassen, wird ein entsprechender Alarm ausgegeben und gegebenenfalls die Information an weitere Geräte weitergegeben. Beispielsweise wird dann ein Starten eines Antriebs des Kraftfahrzeugs verhindert.

Die Steuervorrichtung 117 ist gemäß dem dargestellten Ausführungsbeispiel Teil eines digitalen Tachographens 118. Der digitale Tachograph 118 ist Teil eines Tachographsystems 116.

Gemäß weiteren Ausführungsbeispielen ist die Steuervorrichtung 117 nicht Teil des Tachographsystems 118, sondern beispielsweise als eigenes Bauteil realisiert oder als Teil einer anderen im Kraftfahrzeug 100 vorhandenen Einheit. Mittels des im Kraftfahrzeug 100 integrierten fahrzeugeigenen Wägesystems 101 wird das Gewicht des Kraftfahrzeugs 100 gemessen. Ein derartiges Wägesystem 101 wird im Kraftfahrzeug 100 benötigt, um die Achslast an der Achse 103 zu messen. Es können auch mehrere Sensoren 102 an mehreren der Achsen des Kraftfahrzeugs 100 vorgesehen sein. Beispielsweise ist das Wägesystem 101 so ausgelegt, dass zyklische Messungen des Gewichts sowohl bei eingeschaltetem Zündschalter als auch bei ausgeschaltetem Zündschalter durchgeführt werden können.

Figur 2 zeigt die Achse 103 des Kraftfahrzeugs 100. Die Achse 103 weist ein Differenzialgetriebe 106 auf. Das Differenzialgetriebe weist eine Abdeckung 104 auf. Die Abdeckung 104 ist so konzipiert, dass der Sensor 102, insbesondere ein Dehnmessstreifen 105, an der Innenseite der Abdeckung 104 angebracht ist. Gemäß weiteren Ausführungsbeispielen ist der Sensor 102, insbesondere der Dehnmessstreifen 105, zusätzlich an der Außenseite der Abdeckung 104 angebracht. Wird das Kraftfahrzeug 100 beladen, entsteht an der Achse 103 und damit auch an der Abdeckung 104 eine Biegung, die auch sehr gering sein kann. Diese Biegung wird mit Hilfe des Dehnmessstreifens 105 gemessen. Die daraus resultierende elektrische Spannung entspricht einem bestimmten Gewicht der Beladung. Die gemessene Spannung kann beispielsweise von der Steuervorrichtung 117 und/oder dem digitalen Tachographen 118 weiterverarbeitet werden. Beispielsweise wird das ermittelte Gewicht der Beladung an eine Speichereinheit und/oder eine Anzeigeeinheit übertragen.

Achslasten des Kraftfahrzeugs 100 können durch Drucksensoren an luftgefederten Achsen und/oder Niveausensoren an blattgefederten Achsen gemessen werden. Alternativ oder zusätzlich ist es möglich, die Achslast des Kraftfahrzeugs 100 mittels des Dehnmessstreifens 105 zu ermitteln. Dazu muss der Dehnmessstreifen 105 so angebracht werden, dass er eine Biegung der Achse 103 bei Belastung erfassen kann. Die Anordnung des Dehnmessstreifens 105 an der Abdeckung 104 ermöglicht den Einsatz des fahrzeugeigenen Wägesystems 101 auch bei herkömmlichen Achsen 103. Es muss kein bestimmter Montageplatz für den Sensor 102 an der Achse 103 direkt bereits bei der Auslegung und des Designs der Achse 103 vorgesehen werden. Zudem ist es möglich, den Dehnmessstreifen 105 einfach bei Achsen nachzurüsten, die schon produziert werden beziehungsweise schon in Betrieb sind. Somit fällt eine aufwendige Vorbehandlung der Achsen weg, die notwendig wäre, wenn der Dehnmessstreifen direkt an der Achse 103 montiert werden soll. Ein dauerhafter und stabiler Kraftschluss zwischen der Abdeckung 104 und dem Dehnmessstreifen 105 ist einfach realisierbar. Gegebenenfalls ist die Abdeckung 104 im Vergleich zur herkömmlichen Abdeckung insofern angepasst, dass eine Montageschnittstelle zum Anbringen des Dehnmessstreifens 105 vorgesehen ist.

Die Achse 103 ist insbesondere eine Hinterachse des Kraftfahrzeugs 100. Gemäß weiteren Ausführungsbeispielen ist die Achse 103 eine Vorderachse oder eine Mittelachse des Kraftfahrzeugs 100. Insbesondere ist die Achse 103 eine Antriebsachse des Kraftfahrzeugs 100, auf die die Kraft einer Antriebseinheit übertragen wird. Auf der Innenseite der Abdeckung 104 des Differenzialgetriebes 106 ist der Sensor 102 einfach integrierbar und insbesondere im Betrieb verlässlich benutzbar. Alternativ zur Abdeckung 104 des Differenzialgetriebes 106 ist es auch möglich, den Sensor 102 an einer anderen Abdeckung der Achse vorzusehen, die sich bei einer Biegung der Achse 103 korrespondierend mitverformt.

Der Sensor 102 weist gemäß Ausführungsbeispielen alternativ oder zusätzlich zum Dehnmessstreifen 105 einen anderen Sensor 102 auf. Beispielsweise weist der Sensor 102 ein Potentiometer mit einem Gestänge auf, das eine Biegung der Achse 103 und eine entsprechende Biegung der Abdeckung 104 ermittelt. Auch eine optische Ermittlung einer Biegung der Abdeckung 104 ist möglich mittels eines optischen Sensors 102. Auch der Einsatz eines kapazitiven Sensors 102 ist möglich, beispielsweise eines Fingerkondensators.

Im Kraftfahrzeug 100 ist mindestens ein fahrzeugeigenes Wägesystem 101 verbaut, dass das Fahrzeuggewicht misst. Über die Steuervorrichtung 117 (englisch: Electronic Control Unit, ECU) werden die Daten beispielsweise einem Erfassungs- und Aufzeichnungsgeräte zur Verfügung gestellt, beispielsweise dem digitalen Tachographen 118. Der digitale Tachograph 118 wertet die Daten aus. Beispielsweise speichert der digitale Tachograph Ereignisse und Daten sicher und stellt diese gegebenenfalls anderen Geräten zur Verfügung.

Beispielsweise wird mit der Einführung eines Gesetzes zur Achslastkontrolle mittels eines fahrzeugeigenen Wägesystems 101 bei jedem neuen Lastkraftwagen 100 ein solches Messsystem integriert. Die Möglichkeit einer Nachrüstung vorhandener Kraftfahrzeuge ist mit dem Wägesystem 101 ebenfalls einfach realisierbar. Die Anzeige- und Speicherung der Daten des Wägesystems 101 erfolgt beispielsweise mittels dem bereits im Kraftfahrzeug 100 integrierten digitalen Tachographen 118, der im Vergleich zu herkömmlichen Tachographen dazu ausgebildet ist, die Signale des Sensors 102 zu verarbeiten. Der digitale Tachograph 118 stellt die Daten beispielsweise auch einem übergeordneten Steuergerät beispielsweise in einer Werkstatt zur Verfügung oder übermittelt diese schon während der Fahrt über ein Mobilfunknetz.

Das Wägesystem 101 lässt sich ohne Anpassungen der Achsen 103 in das Kraftfahrzeug 100 integrieren. Gemäß Ausführungsbeispielen ist lediglich eine Anpassung der Abdeckung 104 notwendig. Eine kostengünstige Integration eines fahrzeugeigenen Wägesystems 101 ist somit realisierbar.

## Patentansprüche

1. Achse (103) für ein Kraftfahrzeug (100) aufweisend ein Wägesystem (101), das ausgebildet ist zur Anwendung als fahrzeugeigenes Wägesystem für ein Kraftfahrzeug, aufweisend:
- einen Sensor (102) zum Messen einer Achslast der Achse (103) des Kraftfahrzeugs (100), wobei der Sensor (102) dazu ausgebildet ist, an einer Abdeckung (104) der Achse (103) angeordnet zu werden, die sich korrespondierend mit der Achse (103) in Abhängigkeit von der Achslast verformt, **dadurch gekennzeichnet, dass** der Sensor (102) an einer Innenseite der Abdeckung (104) der Achse (103) angeordnet ist.

2. Achse (103) nach Anspruch 1 aufweisend ein Differentialgetriebe (106) mit einer Differentialabdeckung, wobei der Sensor (102) an der Differentialabdeckung befestigt ist, wobei die Abdeckung (104) die Differentialabdeckung für das Differentialgetriebe (106) der Achse (103) ist.

3. Achse (103) nach Anspruch 1 oder 2, bei dem der Sensor (102) einen Dehnmessstreifen (105) aufweist.

4. Kraftfahrzeug (100) mit einer Achse (103) nach einem der Ansprüche 1 bis 3.

5. Kraftfahrzeug (100) nach Anspruch 4, wobei das Kraftfahrzeug (100) ein Tachographsystem umfasst, das dazu ausgebildet ist, mit dem Wägesystem (101) der Achse (103) signaltechnisch gekoppelt zu sein, um Messsignale des Sensors (102) auszuwerten und in Abhängigkeit von den Messsignalen die Achslast zu ermitteln.

6. Kraftfahrzeug (100) mit einem Tachographsystem nach Anspruch 5, aufweisend:
- eine Steuervorrichtung (117), die signaltechnisch mit dem Sensor (102) gekoppelt ist, um Messsignale des Sensors (102) auszuwerten.

7. Kraftfahrzeug (100) mit einem Tachographsystem nach Anspruch 6, aufweisend:
- einen digitalen Tachographen (118), wobei die Steuervorrichtung (117) Teil des digitalen Tachographen (118) ist.

## Claims

1. Axle (103) for a motor vehicle (100) having a weighing system (101),
which is designed for application as a vehicle-specific weighing system for a motor vehicle, having:
- a sensor (102) for measuring an axle load of the axle (103) of the motor vehicle (100), wherein the sensor (102) is designed to be arranged on a cover (104) of the axle (103) which deforms as a function of the axle load, in a way which corresponds to the axle (103), **characterized in that** the sensor (102) is arranged on an inner side of the cover (104) of the axle (103).

2. Axle (103) according to Claim 1 having a differential gear (106) with a differential cover, wherein the sensor (102) is attached to the differential cover, wherein the cover (104) is the differential cover for the differential gear (106) of the axle (103).

3. Axle (103) according to Claim 1 or 2, in which the sensor (102) has a strain gauge (105).

4. Motor vehicle (100) having an axle (103) according to one of Claims 1 to 3.

5. Motor vehicle (100) according to Claim 4, wherein the motor vehicle (100) comprises a tachograph system which is designed to be coupled in a signal-transmitting fashion to the weighing system (101) of the axle (103), in order to evaluate measurement signals of the sensor (102) and to determine the axle load as a function of the measurement signals.

6. Motor vehicle (100) with a tachograph system according to Claim 5, having:
- a control device (117) which is coupled in a single-transmitting fashion to the sensor (102) in order to evaluate measurement signals of the sensor (102).

7. Motor vehicle (100) with a tachograph system according to Claim 6, having:
- a digital tachograph (118), wherein the control device (117) is part of the digital tachograph (118).

## Revendications

1. Essieu (103) destiné à un véhicule automobile (100) présentant un système de pesée (101) qui est réalisé pour être utilisé en tant que système de pesée embarqué pour un véhicule automobile, présentant :
- un capteur (102) permettant de mesurer une charge à l'essieu de l'essieu (103) du véhicule automobile (100), le capteur (102) étant réalisé pour être disposé au niveau d'un capot (104) de l'essieu (103) qui se déforme en correspondance avec l'essieu (103) en fonction de la charge à l'essieu,
**caractérisé en ce que** le capteur (102) est disposé sur un côté intérieur du capot (104) de l'essieu (103).

2. Essieu (103) selon la revendication 1, présentant un engrenage différentiel (106) muni d'un capot de différentiel, le capteur (102) étant fixé au capot de différentiel, le capot (104) étant le capot de différentiel pour l'engrenage différentiel (106) de l'essieu (103).

3. Essieu (103) selon la revendication 1 ou 2, dans lequel le capteur (102) présente une jauge de contrainte (105) .

4. Véhicule automobile (100) comprenant un essieu (103) selon l'une quelconque des revendications 1 à 3.

5. Véhicule automobile (100) selon la revendication 4, dans lequel le véhicule automobile (100) comprend un système de tachygraphe qui est réalisé pour être couplé au système de pesée (101) de l'essieu (103) pour la transmission de signaux afin d'évaluer des signaux de mesure du capteur (102) et pour établir la charge à l'essieu en fonction des signaux de mesure.

6. Véhicule automobile (100) comprenant un système de tachygraphe selon la revendication 5, présentant :
- un dispositif de commande (117) qui est couplé au capteur (102) pour la transmission de signaux afin d'évaluer les signaux de mesure du capteur (102).

7. Véhicule automobile (100) comprenant un système de tachygraphe selon la revendication 6, présentant :
- un tachygraphe numérique (118), le dispositif de commande (117) faisant partie du tachygraphe numérique (118) .
